# EUROPÄISCHE PATENTSCHRIFT

(11) **EP 3 205 607 B1**
(45) Veröffentlichungstag und Bekanntmachung des Hinweises auf die Patenterteilung: **27.10.2021**
(21) Anmeldenummer: 17155526.1
(22) Anmeldetag: 10.02.2017
(51) Int. Cl.: B65G 1/04, B66F 9/07

(54) **VERFAHREN UND VORRICHTUNG ZUR FÖRDERUNG EINES REGALLAGER-TRANSPORTFAHRZEUGS**
METHOD AND DEVICE FOR SUPPLYING A SHELF TRANSPORT VEHICLE
PROCÉDÉ ET DISPOSITIF DE TRANSPORT D'UN RAYONNAGE D'UN VÉHICULE DE TRANSPORT

(30) Priorität: 10.02.2016 DE 102016201962
(43) Veröffentlichungstag der Anmeldung: 16.08.2017
(73) Patentinhaber: Bundesdruckerei GmbH, 10969 Berlin (DE)
(72) Erfinder: Guß, Christian, 15537 Erkner (DE); Wadepohl, Christoph, 12277 Berlin (DE); Hanschick, Ronny, 12555 Berlin (DE); Wehner, Björn, 12623 Berlin (DE)
(74) Vertreter: Ramrath, Lukas

(56) Entgegenhaltungen:
- WO-A1-2005/001737
- WO-A1-2013/104568
- US-A- 3 746 189
- US-A- 4 007 843

## Beschreibung

Die Erfindung betrifft eine Vorrichtung und ein Verfahren zur Förderung eines Regallager-Transportfahrzeugs in und entgegen einer Vertikalrichtung.

Es sind Regallagersysteme bekannt, in denen ein Regallager-Transportfahrzeug eingesetzt wird, um gelagerte oder zu lagernde Gegenstände von/zu einem entsprechenden Lagerplatz zu transportieren. Ein solches Regallagersystem kann mehrere Ebenen umfassen, in denen sich das Transportfahrzeug jeweils bewegen kann. In diesen Ebenen können wiederum Regale mit mehreren Regalfächern angeordnet sein, wobei Lagerplätze in diesen einzelnen Regalfächern vorgesehen sein können. Um Lagergut zwischen verschiedenen Ebenen zu transportieren, ist es notwendig, auch das Regallager-Transportfahrzeug zwischen diesen verschiedenen Ebenen zu bewegen. Da die Ebenen in einer Vertikalrichtung übereinander angeordnet sein können, ist ein Transport des Transportfahrzeugs in und entgegen der Vertikalrichtung notwendig. Bekannt sind Vorrichtungen zur Förderung solcher Transportfahrzeuge, die entsprechend einer Aufzugsanlage ausgebildet sind, insbesondere als Seilaufzugsanlage. Hierbei wird eine Kabine der Aufzugsanlage in der entsprechenden Ebene des Regalsystems positioniert, um eine Einfahrt des Transportfahrzeugs in die Kabine bzw. eine Ausfahrt des Transportfahrzeugs aus der Kabine zu ermöglichen.

Aufgrund der Elastizität der verwendeten Seile, insbesondere Drahtseile, können sich diese bei Beladung der Kabine ausdehnen oder bei Verringerung der Beladung zusammenziehen. Diese Längenänderung jedoch kann eine Positionsänderung der Kabine während der Einfahrt bzw. Ausfahrt des Transportfahrzeuges bedingen. Das Gewährleisten einer konstanten Position wiederum erfordert komplexe und zeitaufwendige Steuer- bzw. Regelalgorithmen. Weiter wird hierdurch auch die Gesamtzeitdauer der Ein- und Ausfahrt des Transportfahrzeugs verlängert.

Die WO 2005/001737 A1 offenbart ein Verfahren und eine Vorrichtung zum Lagern und Transferieren von Containern von einem Containerschiff gemäß dem Oberbegriff des Anspruchs 1.

Die US 4,007,843 A offenbart ein Warenhaus-System und insbesondere eine Vorrichtung zum automatischen Transferieren von Artikeln in das und aus dem System.

Die US 3,746,189 A offenbart ein automatisches Lagersystem.

Die WO 2013/104568 A1 offenbart eine Führungseinrichtung für ein teleskopierbares Lastaufnahmemittel eines Regalbediengeräts.

Es stellt sich das technische Problem, eine Vorrichtung und ein Verfahren zur Förderung eines Regallager-Transportfahrzeugs zu schaffen, die eine zeitlich schnellere Bewegung des Transportfahrzeugs und somit einen schnelleren Transport von Lagergut ermöglichen.

Die Lösung des technischen Problems ergibt sich durch die Gegenstände mit den Merkmalen der unabhängigen Ansprüche 1 und 10. Weitere vorteilhafte Ausgestaltungen der Erfindung ergeben sich aus den Unteransprüchen.

Vorgeschlagen wird eine Vorrichtung zur Förderung eines Regallager-Transportfahrzeugs in und entgegen einer Vertikalrichtung. Die Vorrichtung kann auch als Aufzugsanlage bezeichnet werden und dient somit dem Transport des Transportfahrzeugs. Wie einleitend bereits erläutert, kann das Transportfahrzeug zum Transport von Lagergut in einem Regallagersystem dienen und somit Teil des Regallagersystems sein. Dieses Regallagersystem kann mindestens zwei in Vertikalrichtung übereinander angeordnete Ebenen umfassen, in denen das Transportfahrzeug zum Transport von Lagergut bewegt werden kann. Insbesondere kann das Transportfahrzeug in jeder Ebene entlang einer geraden Trajektorie bewegt werden. Weiter kann in jeder Ebene mindestens ein Regal mit mindestens einem Regalfach, vorzugsweise mehreren Regalfächern, angeordnet sein, um darin Lagergut zu lagern.

Das Transportfahrzeug kann eine Hubeinrichtung umfassen. Mittels der Hubeinrichtung kann eine Betätigungseinrichtung zur Betätigung von Lagergut des Transportfahrzeugs, insbesondere ein Gabelträger, in und entgegen der Vertikalrichtung bewegbar sein. Weiter kann das Transportfahrzeug eine Antriebseinrichtung zur Bewegung der Hubeinrichtung oder der Betätigungseinrichtung in und entgegen einer lateralen Richtung umfassen.

Weiter kann das Transportfahrzeug eine Antriebseinrichtung zur Bewegung des Transportfahrzeugs in und entgegen einer longitudinalen Richtung umfassen. Die longitudinale Richtung kann beispielsweise parallel zu der vorhergehend erläuterten geraden Trajektorie in der jeweiligen Ebene orientiert sein.

Die Vertikalrichtung kann hierbei parallel und entgegengesetzt zu einer Richtung einer Gravitationskraft orientiert sein. Die erläuterte Vertikalrichtung, laterale Richtung und longitudinale Richtung bezeichnen Raumrichtungen, die senkrecht zueinander orientiert sein können.

Das Regallagersystem kann die vorgeschlagene Aufzugsanlage umfassen. Weiter kann das Regallagersystem einen Transportschacht umfassen, in dem mindestens ein Transportelement für das Transportfahrzeug mittels der Aufzugsanlage in und entgegen der Vertikalrichtung zwischen den mindestens zwei Ebenen gefördert werden kann.

Die Vorrichtung umfasst mindestens eine Führungseinrichtung und das mindestens eine Transportelement für das Transportfahrzeug. Das Transportelement kann auch als Kabine der Aufzugsanlage bezeichnet werden. Das Transportelement kann insbesondere plattenförmig ausgebildet sein oder eine Platte umfassen. Auf einer Oberfläche der Platte kann das Transportfahrzeug zum Transport durch das Transportelement angeordnet werden. Mittels der Führungseinrichtung ist die Bewegung des Transportelements in und entgegen der Vertikalrichtung führbar. Hierzu können Teile der Führungseinrichtung in dem Transportschacht angeordnet sein. Weiter kann die Führungseinrichtung ortsfest angeordnet sein, während das Transportelement bewegbar ist.

Weiter umfasst die Vorrichtung mindestens eine Antriebseinrichtung zum Antrieb des Transportelements. Die Antriebseinrichtung kann hierbei die Gesamtheit aller Elemente bezeichnen, die zur Bewegung des Transportelements in und entgegen der Vertikalrichtung notwendig sind. Somit kann die Antriebseinrichtung z.B. eine Antriebsmaschine, insbesondere eine elektrische Maschine, umfassen. Weiter kann die Antriebseinrichtung Elemente zur mechanischen Kopplung der Antriebsmaschine mit dem Transportelement umfassen. Diese Elemente sind erfindungsgemäß ein oder mehrere Förderseil(e). In diesem Fall kann die vorgeschlagene Aufzugsanlage eine Seilaufzugsanlage sein.

Weiter weist das Transportelement mindestens ein Anschlagelement und die Führungseinrichtung mindestens ein korrespondierendes Anschlagelement auf. Weiter ist das Anschlagelement des Transportelements in einen Anschlagzustand und in einen Freigabezustand versetzbar. Somit kann sich das Anschlagelement des Transportelements in einem Anschlagzustand befinden oder in diesen Anschlagzustand versetzt werden (versetzbar sein) oder sich in einem Freigabezustand befinden oder in diesen Freigabezustand versetzt werden (versetzbar sein). Insbesondere kann das Anschlagelement des Transportelements von dem Anschlagzustand in den Freigabezustand oder von dem Freigabezustand in den Anschlagzustand bewegt werden. Somit kann das Anschlagelement des Transportelements ein bewegliches Anschlagelement sein. Die Vorrichtung kann eine Antriebseinrichtung zur Bewegung des transportelementseitigen Anschlagelements zwischen den verschiedenen Zuständen umfassen. Das Anschlagelement des Transportelements kann an diesem befestigt sein, insbesondere bewegbar befestigt. Das Anschlagelement der Führungseinrichtung kann an dieser befestigt sein, insbesondere, aber nicht zwingend, ortsfest.

Weiter ist das mindestens eine Anschlagelement der Führungseinrichtung derart angeordnet, dass durch die Anschlagelemente eine Bewegung des Transportelements entgegen der Vertikalrichtung, also nach unten, in einer Überfahrtposition für das Transportfahrzeug gesperrt ist. Die Überfahrtposition kann eine vorbestimmte Position des Transportelements relativ zur Führungseinrichtung bezeichnen. Die Überfahrtposition kann insbesondere eine Position des Transportelements bezeichnen, in der das Transportfahrzeug aus einer Ebene des Regalsystems in das oder auf das Transportelement, insbesondere auf die Oberfläche der Platte, bewegt werden kann (Zufahrtposition). Es können mehrere Überfahrtpositionen existieren, insbesondere eine Überfahrtposition pro Ebene.

Die Überfahrtposition kann ebenfalls eine Position sein, in der das Transportfahrzeug von dem Transportelement, insbesondere von der Oberfläche der Platte, in eine Ebene des Regalsystems bewegt werden kann (Ausfahrtposition). Beispielsweise kann eine Bodenfläche des Transportelements in der Überfahrtposition bündig zu einer Oberfläche der Ebene des Regalsystems angeordnet sein. Das Transportelement kann hierbei selbstverständlich mehrere Anschlagelemente, insbesondere zwei Anschlagelemente, umfassen. Auch die Führungseinrichtung kann mehrere korrespondierende Anschlagelemente, insbesondere zwei Anschlagelemente pro Ebene des Regalsystems, umfassen. Die Anschlagelemente der Führungseinrichtung können hierbei entlang der Vertikalrichtung beabstandet voneinander angeordnet sein, wobei der Abstand abhängig von einem Abstand der Ebenen des Regalsystems gewählt werden kann.

In dem Freigabezustand des transportelementseitigen Anschlagelements ist die Bewegung des Transportelements entgegen der Vertikalrichtung nicht gesperrt, also freigegeben.

Ob sich das Transportelement in einer Überfahrtposition befindet kann durch mindestens ein Mittel zur Detektion der Überfahrtposition detektiert werden. Ein solches Mittel kann beispielsweise ein Positionssensor sein oder einen solchen umfassen.

Mit anderen Worten kann durch die Anschlagelemente die Bewegung des Transportfahrzeugs zumindest nach unten blockiert werden. Dies bedeutet, dass sich das Transportelement, insbesondere auch während einer Ein- oder Ausfahrt des Transportfahrzeugs, nicht entgegen der Vertikalrichtung aus der Zufahrtposition bewegen kann.

Die Vorrichtung kann eine Steuer- und/oder Auswerteeinrichtung umfassen. Diese kann z.B. eine Recheneinrichtung, insbesondere einen Mikrocontroller, umfassen. Mittels der Steuer- und Auswerteeinrichtung kann eine Bewegung des Transportelements, des Anschlagelements des Transportelements und/oder des Transportfahrzeugs gesteuert werden.

Erfindungsgemäß ist nach Erreichen der Überfahrtposition ein Förderseil in einen spannungslosen Zustand versetzbar. Weiter fährt das Transportfahrzeug in dem Anschlagzustand und in dem spannungslosen Zustand des Förderseils auf das Transportelement auf oder von dem Transportelement ab.

Durch die vorgeschlagene Vorrichtung ergibt sich in vorteilhafter Weise, dass sich das Transportelement insbesondere während einer Zufahrt des Transportfahrzeugs in oder auf das Transportelement nicht entgegen der Vertikalrichtung bewegen kann. Dies vermeidet in vorteilhafter Weise rechentechnisch und zeitlich aufwendige Steuer- oder Regelungsmaßnahmen und beschleunigt somit die Bewegung des Transportfahrzeugs während der Überfahrt zwischen Transportelement und Ebene.

In einer weiteren Ausführungsform umfasst das Transportelement mindestens eine Führungseinrichtung zur Führung der Bewegung des Transportfahrzeugs entlang einer von der Vertikalrichtung verschiedenen Richtung. Die von der Vertikalrichtung verschiedene Richtung kann insbesondere senkrecht zur Vertikalrichtung orientiert sein.

In der Überfahrtposition kann die Führungseinrichtung des Transportelements zu einer Führungseinrichtung des Regellagersystems ausgerichtet sein. Die Führungseinrichtung des Regallagersystems kann zur Führung der Bewegung des Transportfahrzeugs in einer der Ebenen dienen.

Die Führungseinrichtung(en) kann/können insbesondere als Führungsschiene ausgebildet sein. Im ausgerichteten Zustand kann insbesondere eine ruckelfreie Überfahrt des Transportfahrzeugs von der Führungseinrichtung des Transportelements zur Führungseinrichtung des Regallagersystems möglich sein. Das Regallagersystem kann hierbei pro Ebene mindestens eine Führungseinrichtung umfassen.

Das Regallagersystem und/oder das Transportelement kann mindestens ein Element zur Freigabe der Überfahrt umfassen. Das Element zur Freigabe kann in einem Sperrzustand die Überfahrt, insbesondere mechanisch, blockieren und in einem Freigabezustand die Überfahrt freigeben. Beispielsweise kann das Element zur Freigabe als Bolzen ausgebildet sein. Im Sperrzustand kann zumindest ein Teil des Bolzens in einer Führungseinrichtung des Regallagersystems bzw. des Transportelements angeordnet sein. Insbesondere kann das mindestens eine Element zur Freigabe sich im Sperrzustand befinden oder in den Sperrzustand versetzt werden, wenn die Führungseinrichtungen nicht ausgerichtet sind. Weiter kann das Element zur Freigabe sich im Freigabezustand befinden oder in den Freigabezustand versetzt werden, wenn die Führungseinrichtungen ausgerichtet sind.

Auch kann das Element zur Freigabe sich im Freigabezustand befinden oder in den Freigabezustand versetzt werden, wenn das Anschlagelement sich im Anschlagzustand befindet. Weiter kann das Element zur Freigabe sich im Sperrzustand befinden oder in den Sperrzustand versetzt werden, wenn das Anschlagelement sich nicht im Anschlagzustand befindet.

Hierdurch ergibt sich in vorteilhafter Weise eine problemlose Bewegung des Transportfahrzeugs zwischen Transportelement und Ebene in der Überfahrtposition. Dies wiederum ermöglicht eine zeitlich schnellere Bewegung.

In einer weiteren Ausführungsform umfasst die Vorrichtung eine Einrichtung zur Erfassung einer Seilspannung. In diesem Fall kann das Transportelement mit einer Antriebsmaschine über mindestens ein Förderseil, vorzugsweise über zwei oder mehrere Förderseile, gekoppelt sein. Das mindestens eine Förderseil kann hierbei selbstverständlich über ein oder mehrere Umlenkrollen geführt werden, um die Antriebsmaschine mit dem Transportelement zu koppeln. Durch das mindestens eine Seil kann insbesondere eine Rotationsbewegung einer Abtriebswelle der Antriebsmaschine eine Auf- oder Abwärtsbewegung des Transportelements bewirken. Das Förderseil kann insbesondere ein Drahtseil sein.

Beispielsweise kann eine Ausfahrt des Transportfahrzeugs von dem Transportelement nur dann erfolgen bzw. freigegeben werden, wenn durch die Einrichtung zur Erfassung der Seilspannung ein spannungsloser Zustand des Seils erfasst wird. Hierdurch kann in vorteilhafter Weise vermieden werden, dass bei einer Reduktion der Beladung des Transportelements das Transportelement aufgrund der Elastizität des Seiles entlang der Vertikalrichtung, also nach oben, bewegt wird. Auch dies ermöglicht in vorteilhafter Weise eine schnellere Bewegung des Transportfahrzeugs zwischen einer Ebene und dem Transportelement.

In einer weiteren Ausführungsform ist die Einrichtung zur Erfassung der Seilspannung als Schalter ausgebildet, wobei der Schalter mittels einer Schaltfahne mechanisch mit einem Seilende gekoppelt ist. Der Schalter kann beispielsweise eine erste Schalterstellung einnehmen, wenn sich das Förderseil in dem spannungslosen Zustand befindet. Weiter kann der Schalter sich in einer von der ersten Schalterstellung verschiedenen zweiten Schalterstellung befinden, wenn das Förderseil unter einer vorbestimmten Spannung steht. Die Schalterstellung kann hierbei mittels einer entsprechend ausgebildeten Einrichtung erfasst werden.

Das Seilende kann insbesondere ein Ende des Förderseiles bezeichnen, welches an dem Transportelement befestigt ist. Beispielsweise kann das Förderseil über ein Federelement an dem Transportelement befestigt sein. Befindet sich das Förderseil in einem spannungslosen Zustand, so kann das Federelement eine erste Länge aufweisen. Befindet sich das Seil in einem gespannten Zustand, so kann das Federelement eine Länge aufweisen, die verschieden, insbesondere kleiner, als die erste Länge ist. Somit kann auch die Länge des Federelements zur Erfassung der Seilspannung genutzt werden. Der Schalter kann mit dem Federelement verbunden sein. Beispielsweise kann der Schalter derart mit dem Federelement verbunden sein, dass dieser die erste Schalterstellung einnimmt, wenn die Länge des Federelements gleich der ersten Länge ist. Weiter kann der Schalter die weitere Schalterstellung einnehmen, wenn die Länge des Federelements verschieden von der ersten Länge, insbesondere kleiner als die erste Länge, ist.

Durch die Ausbildung der Einrichtung zur Erfassung als Schalter ergibt sich in vorteilhafter Weise eine einfache mechanische Ausbildung, die dennoch eine zuverlässige Detektion der Seilspannung ermöglicht. Durch das Vorsehen einer Schaltfahne kann in vorteilhafter Weise eine Flexibilität der räumlichen Anordnung des Schalters erhöht werden.

In einer weiteren Ausführungsform ist das Anschlagelement des Transportelements als Bolzen ausgebildet. Hierdurch ergibt sich in vorteilhafter Weise ein einfach herzustellendes Anschlagelement mit einer gewünschten mechanischen Belastbarkeit.

In einer weiteren Ausführungsform ist der Bolzen ein- und ausfahrbar. Beispielsweise kann sich der Bolzen im Anschlagzustand befinden, wenn er sich in einem ausgefahrenen Zustand befindet. Entsprechend kann sich der Bolzen in einem Freigabezustand befinden, wenn er sich in einem eingefahrenen Zustand befindet. Hierdurch ergibt sich in vorteilhafter Weise eine einfach bereitzustellende Bewegung des Anschlagelements zwischen dem Anschlag- und Freigabezustand.

In einer weiteren Ausführungsform umfasst die Vorrichtung mindestens einen Positionssensor für das Anschlagelement des Transportelements. Mittels des Positionssensors kann insbesondere detektiert werden, ob sich das Anschlagelement im Anschlagzustand oder im Freigabezustand und/oder zwischen dem Anschlag- und Freigabezustand befindet. Beispielsweise kann der Positionssensor als Endlagensensor ausgebildet sein. Selbstverständlich kann die Vorrichtung auch mehrere Positionssensoren, insbesondere mehrere Endlagensensoren, umfassen. Insbesondere kann sich das Anschlagelement in einer Endposition in einem Freigabe- oder Anschlagzustand befinden.

Hierdurch ergibt sich in vorteilhafter Weise eine Verbesserung der Betriebssicherheit der Vorrichtung. Insbesondere kann eine Bewegung des Transportelements, insbesondere eine Bewegung entgegen der Vertikalrichtung, nur dann freigegeben werden, wenn mittels des Positionssensors detektiert wird, dass sich das Anschlagelement in dem Freigabezustand befindet.

In einer weiteren Ausführungsform weist das Anschlagelement der Führungseinrichtung eine Ausnehmung zur Aufnahme des Anschlagelements des Transportelements auf. Die Ausnehmung kann hierbei in zumindest eine, vorzugsweise in mehrere, jedoch nicht alle, Raumrichtungen eine formschlüssige Aufnahme des Anschlagelements des Transportelements ermöglichen. Beispielsweise kann die Ausnehmung einen im Querschnitt teilkreis- oder teilovalförmigen Abschnitt umfassen. Die Querschnittsebene kann hierbei orthogonal zu einer geradlinigen Bewegungsrichtung des Anschlagelements zwischen Anschlag- und Freigabezustand orientiert sein.

Weiter ist es möglich, dass das Anschlagelement der Führungseinrichtung einen sich entlang der Bewegungsrichtung des Anschlagelements des Transportelements vom Freigabezustand in den Anschlagzustand verjüngende Ausnehmung umfasst.

Ist das Anschlagelement der Führungseinrichtung an dieser befestigt, so kann die Ausnehmung entlang der Vertikalrichtung, also nach oben hin, geöffnet sein. Insbesondere kann die Öffnung derart dimensioniert sein, dass eine Bewegung des Transportelements mit einem Anschlagelement im Anschlagzustand in Vertikalrichtung aus der Ausnehmung möglich ist.

Hierdurch ergibt sich in vorteilhafter Weise eine mechanisch stabile Wechselwirkung zwischen dem Anschlagelement des Transportelements im ausgefahrenen Zustand und dem Anschlagelement der Führungseinrichtung. Hierdurch kann die Bewegung des Transportelements, insbesondere nach unten, sicher verhindert werden. Insbesondere können die Anschlagelemente derart ausgebildet sein, dass für ein vorgegebenes Maximalgewicht des Transportelements, insbesondere ein Gewicht in einem maximal beladenen Zustand, die Bewegung nach unten auch bei Abriss eines oder mehrerer Seile zuverlässig verhindert wird.

In einer weiteren Ausführungsform ist das Anschlagelement der Führungseinrichtung beabstandet von einer Führungsfläche der Führungseinrichtung angeordnet. Beispielsweise kann das Anschlagelement der Führungseinrichtung mittels einer Auflagerplatte an der Führungsfläche befestigt sein, wobei die Auflagerplatte zwischen der Führungsfläche und dem Anschlagelement angeordnet ist. Die Führungsfläche dient hierbei zur Führung der Bewegung des Transportelements und kann hierzu mit einem Teil des Transportelements wechselwirken. Beispielsweise kann der bewegliche Teil des Transportelements mindestens ein Rad aufweisen, welches sich bei einer Bewegung des Transportelements in oder entgegen der Vertikalrichtung entlang der Führungsfläche bewegt.

Durch die beabstandete Anordnung ergibt sich in vorteilhafter Weise, dass sich das Anschlagelement des Transportelements im Anschlagzustand durch das gesamte Anschlagelement der Führungseinrichtung hindurch erstrecken kann, insbesondere durch die gesamte Ausnehmung eines solchen Anschlagelements. Hierdurch wird in vorteilhafter Weise die Stabilität der mechanischen Verbindung zwischen Führungseinrichtung und Transportelement im Anschlagzustand verbessert.

Weiter vorgeschlagen wird ein Verfahren zur Förderung eines Regallager-Transportfahrzeugs in und entgegen einer Vertikalrichtung mittels einer Vorrichtung gemäß einer der in dieser Offenbarung beschriebenen Ausführungsformen. Das Verfahren kann hierbei Teil eines Verfahrens zum Betrieb eines teilweise automatisierten Regallagersystems sein.

In dem Verfahren wird das Transportelement entlang der Führungseinrichtung in eine Überfahrtposition für das Transportfahrzeug bewegt. Diese Bewegung kann eine Bewegung in oder entgegen der Vertikalrichtung sein. Zeitlich vor oder zeitlich nach dem Erreichen der Überfahrtposition wird das Anschlagelement des Transportelements in den Anschlagzustand versetzt, insbesondere bewegt, insbesondere aus dem Freigabezustand.

Hierbei ist es möglich, dass das Anschlagelement des Transportelements nur dann zeitlich vor dem Erreichen der Überfahrtposition in den Anschlagzustand versetzt wird, wenn das Transportelement entgegen der Vertikalrichtung, mit anderen Worten von oben, in die Überfahrtposition bzw. auf die Überfahrtposition zu bewegt wird. Mit anderen Worten wird das Anschlagelement des Transportelements nur dann zeitlich vor dem Erreichen der Überfahrtposition in den Anschlagzustand versetzt, wenn das Transportelement sich entlang der Vertikalrichtung über bzw. oberhalb der Überfahrtposition befindet. Wird das Transportelement in der Vertikalrichtung, also von unten, in die Überfahrtposition bzw. auf die Überfahrtposition zu bewegt, so kann das Anschlagelement des Transportelements erst dann in den Anschlagzustand versetzt werden, wenn die Überfahrtposition erreicht ist. Wird das Transportelement also mit einer Bewegung in der Vertikalrichtung auf die Überfahrtposition zu bewegt, so kann das Anschlagelement des Transportelements erst zeitlich nach dem Erreichen der Überfahrtposition in den Anschlagzustand versetzt werden. Wird das Transportelement mit einer Bewegung entgegen der Vertikalrichtung auf die Überfahrtposition zu bewegt, so kann das Anschlagelement des Transportelements zeitlich vor oder zeitlich nach dem Erreichen der Überfahrtposition in den Anschlagzustand versetzt werden.

Weiter fährt das Transportfahrzeug in dem Anschlagzustand auf das Transportelement auf, insbesondere wenn sich das Transportelement in der Überfahrtposition befindet. Alternativ fährt das Transportfahrzeug in dem Anschlagzustand von dem Transportelement ab, insbesondere wenn sich das Transportelement in der Überfahrtposition befindet. Insbesondere kann das Transportfahrzeug von einer Ebene des Regalsystems auf das Transportelement auffahren oder von dem Transportelement in eine Ebene des Transportelements abfahren.

Nach dem Auffahren kann das Transportelement mit dem aufgefahrenen Transportfahrzeug in oder entgegen der Vertikalrichtung bewegt werden, insbesondere in eine weitere Überfahrtposition für eine weitere Ebene des Regalsystems. Aus dieser weiteren Überfahrtposition kann dann das Transportfahrzeug aus dem Transportelement in die weitere Ebene abfahren. Hierdurch wird also ein schneller und sicherer Transport des Transportfahrzeugs zwischen verschiedenen Ebenen des Regalsystems ermöglicht. Selbstverständlich kann das Transportelement auch nach dem Abfahren, also ohne aufgefahrenes Transportfahrzeug, in oder entgegen der Vertikalrichtung bewegt werden, insbesondere in eine weitere Überfahrtposition für eine weitere Ebene des Regalsystems. Weiter kann das Anschlagelement des Transportelements, insbesondere zeitlich nach dem Auffahren oder Abfahren des Transportfahrzeugs, von dem Anschlagzustand in den Freigabezustand versetzt werden. Hierbei kann das das Anschlagelement des Transportelements in den Freigabezustand versetzt werden, wenn sich das Transportelement in der Überfahrtposition oder in Vertikalrichtung über bzw. oberhalb der Überfahrtposition befindet, insbesondere also wenn das Transportelement in Vertikalrichtung von der Überfahrtposition weg bewegt wird oder wurde. Wird das Transportelement also mit einer Bewegung in der Vertikalrichtung aus der Überfahrtposition bewegt, so kann das Anschlagelement des Transportelements zeitlich vor, zeitlich während oder zeitlich nach dieser Bewegung, also dem Verlassen der Überfahrtposition, in den Freigabezustand versetzt werden. Wird das Transportelement mit einer Bewegung entgegen der Vertikalrichtung aus der Überfahrtposition bewegt, so kann das Anschlagelement des Transportelements zeitlich vor dieser Bewegung, also vor dem Verlassen der Überfahrtposition, in den Freigabezustand versetzt werden.

Das Anschlagelement ermöglicht in vorteilhafter Weise, dass sich das Transportelement während der Auffahrt des Transportfahrzeugs aufgrund der damit eintretenden Beladungszunahme nicht nach unten bewegt und eine zeitaufwendig und rechentechnisch komplizierte Kompensation dieser Positionsänderung durchgeführt werden muss.

Erfindungsgemäß wird nach Erreichen der Überfahrtposition ein Förderseil in einen spannungslosen Zustand versetzt. Der spannungslose Zustand bezeichnet hierbei einen Zustand, in dem die verbleibende Seilspannung nicht ausreicht, um das unbeladene Transportelement zu bewegen, insbesondere in Vertikalrichtung. Das Förderseil kann beispielsweise durch eine entsprechende Steuerung der Antriebsmaschine in den spannungslosen Zustand versetzt werden. Weiter fährt das Transportfahrzeug in dem Anschlagzustand und in dem spannungslosen Zustand des Förderseils auf das Transportelement auf oder von dem Transportelement ab. Insbesondere beim Abfahren des Transportelements und der hierbei erfolgenden Beladungsreduktion des Transportelements kann in vorteilhafter Weise verhindert werden, dass sich das Transportelement während der Abfahrt oder nach der Abfahrt aufgrund der Seilspannung nach oben bewegt. Auch hierdurch wird eine zeitlich schnelle Überfahrt von dem Transportelement in eine Ebene des Regalsystems ermöglicht.

In einer weiteren Ausführungsform wird das Transportelement entgegen der Vertikalrichtung auf die Überfahrtposition zubewegt, wobei eine Geschwindigkeit des Transportelements vor Erreichen der Überfahrtposition reduziert wird. Das Anschlagelement des Transportelements wird in den Anschlagzustand versetzt, wenn die Geschwindigkeitsreduktion erfolgt. Insbesondere kann das Anschlagelement während der Geschwindigkeitsreduktion in den Anschlagzustand versetzt werden. Weiter kann die Versetzung in den Anschlagzustand derart erfolgen, dass das Anschlagelement sich im Anschlagzustand befindet, wenn das Transportelement die Überfahrtposition erreicht. In diesem Fall kann es möglich sein, dass das Anschlagelement von oben in eine Ausnehmung des führungseinrichtungsseitigen Anschlagelements einfährt.

Hierdurch ergibt sich in vorteilhafter Weise, dass die Bewegung des Anschlagelements des Transportelements zeitlich parallel zur Bewegung des Transportelements erfolgt und somit eine Gesamtzeitdauer des Betriebs des Regallagersystems nicht verlängert wird.

In einer weiteren Ausführungsform wird das Transportelement nach der Auf- oder Abfahrt des Transportfahrzeugs in Vertikalrichtung bewegt, wobei das Anschlagelement des Transportelements erst dann in den Freigabezustand versetzt wird, wenn sich das Transportelement über der Überfahrtposition befindet. Zum einen kann hierdurch sichergestellt werden, dass keine Beschädigung des Förderseils, insbesondere kein Seilriss, erfolgt ist.

In einer weiteren Ausführungsform wird das Anschlagelement des Transportelements in den Freigabezustand versetzt, während das Transportelement in Vertikalrichtung bewegt wird. Hierdurch wird ebenfalls in vorteilhafter Weise die Bewegung des Anschlagelements zeitlich parallel zur Bewegung des Transportelements durchgeführt und die Gesamtzeitdauer des Betriebs nicht verlängert.

Die Erfindung wird anhand von Ausführungsbeispielen näher erläutert. Die Figuren zeigen:
- Fig. 1: eine schematische Ansicht eines Regalsystems,
- Fig. 2: einen schematischen Querschnitt durch eine Führungseinrichtung und ein Transportelement,
- Fig. 3: einen schematischen Querschnitt durch ein Transportelement und
- Fig. 4: eine schematische Ansicht von Anschlagelementen.

Nachfolgend bezeichnen gleiche Bezugszeichen Elemente mit gleichen oder ähnlichen technischen Merkmalen.

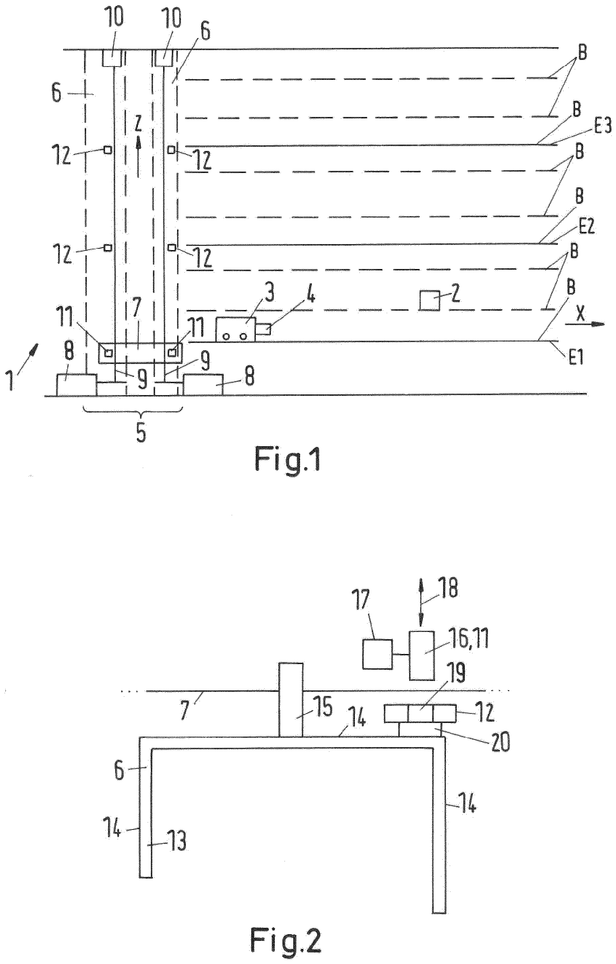

In Fig. 1 ist schematisch ein Regallagersystem 1 zur Lagerung von Lagergütern 2 dargestellt. In dem dargestellten Ausführungsbeispiel umfasst das Regalsystem drei Ebenen E1, E2, E3. Jede der Ebenen E1, E2, E3 umfasst ein Regal mit drei Regalfächern B, wobei eine Oberfläche jeder Ebene ebenfalls ein Regalfach B ausbildet.

Auf der Oberfläche jeder Ebene E1, E2, E3 ist ein Regallager-Transportfahrzeug 3, welches nachfolgend als Transportfahrzeug bezeichnet wird, bewegbar. Hierbei kann das Transportfahrzeug 3 in der jeweiligen Ebene E1, E2, E3 nur in und entgegen einer longitudinalen Richtung x bewegt werden. Hierzu kann das Regalsystem 1 nicht dargestellte Führungsschienen umfassen, welche die Bewegung des Transportfahrzeugs 3 in und entgegen der longitudinalen Richtung x in der Ebene E1, E2, E3 führen.

Das Transportfahrzeug 3 umfasst eine Hubeinrichtung 4, die in und entgegen einer Vertikalrichtung z und in und entgegen einer nicht dargestellten lateralen Richtung bewegbar ist. Die laterale Richtung ist hierbei senkrecht zur longitudinalen Richtung x und Vertikalrichtung z orientiert. Durch eine Bewegung der Hubeinrichtung 4 können einzelne Lagergüter 2 zu oder von den entsprechenden Regalfächern B transportiert werden.

Weiter dargestellt ist eine Vorrichtung 5 zur Förderung des Transportfahrzeugs 3 in und entgegen der Vertikalrichtung z. Die Vorrichtung 5 umfasst gestrichelt dargestellte Führungseinrichtungen 6 zur Führung einer Bewegung eines Transportelements 7 in und entgegen der Vertikalrichtung z. Weiter umfasst die Vorrichtung 5 eine Antriebseinrichtung zum Antrieb des Transportelements 7, wobei die Antriebseinrichtung Servomotoren 8 umfasst, deren Abtriebswellen mit Förderseilen 9 gekoppelt sind. Diese Förderseile 9 sind über Umlenkrollen 10 geführt und mechanisch mit dem Transportelement 7 verbunden. Durch Rotation der Abtriebswellen der Servomotoren 8 kann das Transportelement 7 in und entgegen der Vertikalrichtung z bewegt werden, wobei diese Bewegung durch die Führungseinrichtungen 6 geführt wird.

Weiter weist das Transportelement 7 Anschlagelemente 11 auf. Die Führungseinrichtungen 6 weisen korrespondierende Anschlagelemente 12 auf. Wie nachfolgend noch näher erläutert, können Anschlagelemente 11 des Transportelements 7 von einem Anschlagzustand in einen Freigabezustand und von einem Freigabezustand in einen Anschlagzustand versetzt werden.

In Fig. 1 ist dargestellt, dass sich das Transportelement 7 in einer ersten Überfahrtposition befindet, wobei diese erste Überfahrtposition der ersten Ebene E1 zugeordnet ist In dieser ersten Überfahrtposition können die in den Anschlagzustand versetzten Anschlagelemente 11 des Transportelements 7 derart mit nicht dargestellten Anschlagelementen der Führungseinrichtung 6 wechselwirken, dass durch die Anschlagelemente 11 eine Bewegung des Transportelements 7 entgegen der Vertikalrichtung 7, also nach unten, gesperrt bzw. verhindert ist. In der Überfahrtposition kann eine Oberfläche des Transportelements 7 bündig zu einer Oberfläche der entsprechenden Ebene E1, E2, E3 angeordnet sein. Dies ermöglicht eine einfache, insbesondere ruckfreie, Überfahrt des Transportfahrzeugs 3 von der Ebene E1 auf das Transportelement 7.

Nicht dargestellt ist, dass das Transportelement 7 Führungsschienen zur Führung der Bewegung des Transportfahrzeugs 3 in und entgegen der longitudinalen Richtung x aufweisen kann. In der Überfahrtposition können die Führungsschienen in der jeweiligen Ebene E1, E2, E3 zu den Führungsschienen des Transportelements 7 ausgerichtet sein.

Fig. 2 zeigt einen schematischen Querschnitt durch ein Transportelement 7 und eine Führungseinrichtung 6. Hierbei ist dargestellt, dass die Führungseinrichtung einen U-profilförmigen Abschnitt 13 umfasst. Äußere Oberflächen dieses U-profilförmigen Abschnitts 13 dienen als Führungsflächen 14 für Laufräder 15 des Transportelements 7, wobei nur ein Laufrad 15 dargestellt ist. Das Transportelement 7 umfasst ein als Bolzen 16 ausgebildetes Anschlagelement 11. Weiter umfasst das Transportelement 7 eine Antriebseinrichtung 17 für den Bolzen 16. Durch die Antriebseinrichtung 17 kann der Bolzen 16 mit einer Linearbewegung, die durch einen Pfeil 18 angedeutet ist, von einem eingefahrenen Zustand in einen ausgefahrenen Zustand und umgekehrt bewegt werden. Hierbei entspricht der eingefahrene Zustand einem Freigabezustand und der ausgefahrene Zustand einem Anschlagzustand.

Weiter dargestellt ist ein Anschlagelement 12 der Führungseinrichtung 6. Das Anschlagelement 12 ist plattenförmig ausgebildet und weist eine Ausnehmung 19 auf, insbesondere an einem in Vertikalrichtung z oberen Ende. Das führungseinrichtungsseitige Anschlagelement 12 ist hierbei über eine Auflagerplatte 20 an einer Führungsfläche 14 des U-profilförmigen Abschnitts 13 befestigt. Insbesondere ist die Auflagerplatte 20 zwischen dem Anschlagelement 12 und der Führungsfläche 14 angeordnet.

In dem ausgefahrenen Zustand kann der Bolzen 16 in der Ausnehmung 19 angeordnet sein oder in diese bewegt werden. In dem eingefahrenen Zustand ist der Bolzen 16 außerhalb der Ausnehmung 19 angeordnet und kann nicht in diese bewegt werden.

Die Verbindung kann hierbei über Schrauben erfolgen. Es ist möglich, dass das Anschlagelement 12 und gegebenenfalls auch die Auflagerplatte 20 Langlöcher aufweist, um eine vertikale Position des Anschlagelements 12 einstellen zu können. Dies ermöglicht eine Feinjustierung des führungseinrichtungsseitigen Anschlagelements 12, um die Wechselwirkung zwischen den Anschlagelementen 11, 12 in der vorhergehend erläuterten Überfahrtposition zu gewährleisten.

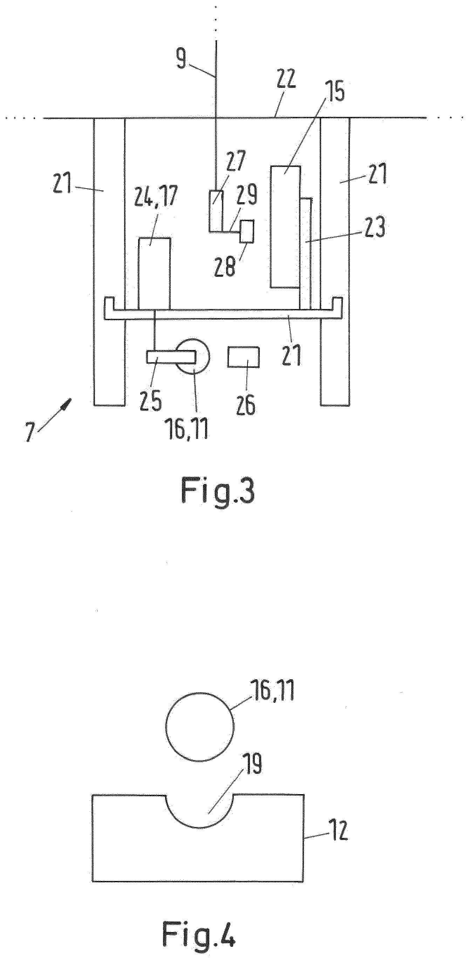

Fig. 3 zeigt einen weiteren schematischen Querschnitt durch ein Transportelement 7. Das Transportelement 7 umfasst Gestellschienen 21, an denen eine Transportplatte 22 für ein Transportfahrzeug 3 (siehe Fig. 1) befestigt ist. Weiter ist an Gestellschienen 21 ein Laufrad 15 des Transportelements 7 über ein Verbindungselement 23 drehbar gelagert.

Weiter ist eine als Servomotor 24 ausgebildete Antriebseinrichtung 17 für ein als Bolzen 16 ausgebildetes Anschlagelement 11 an Gestellschienen 21 befestigt. Hierbei ist der Servomotor 24 über ein Winkelgetriebe 25 mit dem Bolzen 16 verbunden. Über das Winkelgetriebe 25 kann eine Rotationsbewegung der Abtriebswelle des Servomotors 24 in eine Linearbewegung des Bolzens 16 umgewandelt werden.

Weiter umfasst das Transportelement 7 einen Positionssensor 26 zur Erfassung einer Position des Bolzens 16. Insbesondere kann mittels des Positionssensors 26 erfasst werden, ob sich der Bolzen 16 im eingefahrenen oder ausgefahrenen Zustand, also im Freigabezustand oder im Anschlagzustand, befindet.

Weiter dargestellt ist ein Förderseil 9, welches über ein Federelement 27 mit dem Transportelement 7, insbesondere mit Gestellschienen 21, verbunden ist. Weiter dargestellt ist eine als Schalter ausgebildete Einrichtung 28 zur Erfassung einer Seilspannung des Förderseils 9.

Befindet sich das Förderseil 9 in einem ungespannten Zustand, so weist das Federelement 27 eine erste Länge auf. Befindet sich das Förderseil 9 in einem gespannten Zustand, so weist das Federelement 27 eine zweite Länge auf, die kleiner als die erste Länge ist. Somit befindet sich das freie Ende des Federelements 27 je nach Spannungszustand in unterschiedlichen Positionen. Dies kann mittels des Schalters 28 detektiert werden, der über eine Schaltfahne 29 mit dem freien Ende gekoppelt ist.

In dem ungespannten Zustand kann eine Seilspannung nicht ausreichen, um ein unbeladenes Transportelement 7 in Vertikalrichtung z zu bewegen. In dem gespannten Zustand kann die aufgrund der Seilspannung auf das Transportelement 7 ausgeübte Seilkraft eine Bewegung des unbeladenen Transportelements 7 entlang der Vertikalrichtung z bewirken.

Fig. 4 zeigt eine schematische Ansicht eines als Bolzen 16 ausgebildeten Anschlagelements eines Transportelements 7. Weiter dargestellt ist ein Querschnitt durch ein Anschlagelement 12 der Führungseinrichtung 6 (siehe Fig. 1) dargestellt ist eine Ausnehmung 19 im führungseinrichtungsseitigen Anschlagelement 12, wobei diese im Querschnitt halbkreisförmig ausgebildet ist. Ein Radius des halbkreisförmigen Querschnitts ist gleich oder um ein vorbestimmtes Maß größer als ein Radius des Bolzens 16. Beispielsweise kann der Bolzen 16 einen Durchmesser von 50 mm bis 60 mm aufweisen. Somit kann auch der halbkreisförmige Querschnitt einen entsprechenden Durchmesser aufweisen. Entlang der Bewegungsrichtung des Bolzens 16 kann die Ausnehmung 19 eine Länge von beispielsweise 72 mm aufweisen.

Im erfindungsgemäßen Verfahren kann beispielsweise das in Fig. 1 dargestellte Transportelement 7 durch eine Betätigung der Servomotoren 8 entgegen der Vertikalrichtung z in eine Überfahrtposition bewegt werden, die zur ersten Ebene E1 korrespondiert. Hierbei kann eine Bewegungsgeschwindigkeit des Transportelements 7 bei der Bewegung entgegen der Vertikalrichtung z über dieser Überfahrtposition reduziert werden. Vor dem Erreichen der Überfahrtposition, insbesondere während der Geschwindigkeitsreduktion, können die Anschlagelemente 11 in den Anschlagzustand versetzt werden. Bei Erreichen der Überfahrtposition wechselwirken die Anschlagelemente 11 mit ortsfest an den Führungseinrichtungen 6 montierten Anschlagelementen 12 derart, dass eine weitere Bewegung des Transportelements 7 entgegen der Vertikalrichtung z verhindert wird. In diesem Fall kann das in Fig. 1 dargestellte Transportfahrzeug 3 von der ersten Ebene E1 auf das Transportelement 7 auffahren.

Um das Transportfahrzeug 3 mittels des Transportelements 7 in die zweite oder dritte Ebene E2, E3 zu transportieren, können dann die Servomotoren 8 entsprechend betrieben werden. Die Anschlagelemente 11 des Transportelements 7 können insbesondere nach Verlassen der Überfahrtposition in den Freigabezustand versetzt werden, insbesondere wenn das Transportelement 7 mit einer Bewegung in der Vertikalrichtung z die Überfahrtposition verlässt.

Entsprechend diesen Ausführungen kann die Lage des Transportfahrzeugs 7 durch Anschlagelemente 11, 12 auch in Überfahrtpositionen gesichert werden, die den weiteren Ebenen E2, E3 zugeordnet sind.

Bevor die Ausfahrt bzw. Abfahrt des Transportfahrzeugs 3 von dem Transportelement 7 in eine dieser weiteren Ebenen E2, E3 freigegeben wird, kann eine Seilspannung erfasst werden. Insbesondere kann die Ausfahrt nur dann freigegeben werden, wenn sich das Förderseil 9 (siehe Fig. 3) in einem ungespannten Zustand befindet.

Nicht dargestellt ist eine Verriegelungseinrichtung zur Freigabe oder zur Sperrung der Bewegung des Transportfahrzeuges 3 zwischen einer Ebene E1, E2, E3 und dem Transportelement 7. Die Verriegelungseinrichtung kann insbesondere derart angeordnet sein, dass eine Bewegung des Transportfahrzeuges 3 entlang der longitudinalen Richtung x von einer Ebene E1, E2, E3 nur dann freigegeben wird, wenn sich das Transportelement 7 in der entsprechenden Überfahrtposition befindet. Entsprechend kann eine Bewegung des Transportfahrzeuges 3 in der longitudinalen Raumrichtung x von dem Transportelement 7 in eine der Ebenen E1, E2, E3 nur dann freigegeben werden, wenn sich das Transportelement 7 in einer Überfahrtposition befindet.

### Bezugszeichenliste

- 1: Regallagersystem
- 2: Lagergut
- 3: Transportfahrzeug
- 4: Hubeinrichtung
- 5: Vorrichtung
- 6: Führungseinrichtung
- 7: Transportelement
- 8: Servomotor
- 9: Förderseil
- 10: Umlenkrolle
- 11: Anschlagelement des Transportelements
- 12: Anschlagelement der Führungseinrichtung
- 13: U-profilförmiger Abschnitt
- 14: Führungsfläche
- 15: Laufrad
- 16: Bolzen
- 17: Antriebseinrichtung
- 18: Pfeil
- 19: Ausnehmung
- 20: Lagerplatte
- 21: Gestellschiene
- 22: Transportplatte
- 23: Verbindungselement
- 24: Servomotor
- 25: Schwenkgetriebe
- 26: Positionssensor
- 27: Federelement
- 28: Schalter
- 29: Schaltfahne
- E1, E2, E3: Ebene
- B: Regalfach
- x: longitudinale Richtung
- z: Vertikalrichtung

## Patentansprüche

1. Vorrichtung zur Förderung eines Regallager-Transportfahrzeugs (3) in und entgegen einer Vertikalrichtung (z), wobei die Vorrichtung (5) mindestens eine Führungseinrichtung (6) und mindestens ein Transportelement (7) für das Transportfahrzeug (3) umfasst, wobei mittels der Führungseinrichtung (6) eine Bewegung des Transportelements (7) in und entgegen der Vertikalrichtung (z) führbar ist, wobei die Vorrichtung mindestens eine Antriebseinrichtung zum Antrieb des Transportelements (7) mit mindestens einem Förderseil (9) umfasst, wobei das Transportelement (7) mindestens ein Anschlagelement (11) und die Führungseinrichtung (6) mindestens ein korrespondierendes Anschlagelement (12) aufweist, wobei das Anschlagelement (11) des Transportelements (7) in einen Anschlagzustand und in einen Freigabezustand versetzbar ist, wobei das mindestens eine Anschlagelement (12) der Führungseinrichtung (6) derart angeordnet ist, dass durch die Anschlagelemente (11, 12) eine Bewegung des Transportelements (7) entgegen der Vertikalrichtung (z) in einer Überfahrtposition für das Transportfahrzeug (3) gesperrt ist,
**dadurch gekennzeichnet, dass** die Vorrichtung so konfiguriert ist, dass nach Erreichen der Überfahrtposition im Anschlagzustand das mindestens eine Förderseil (9) in einen spannungslosen Zustand zum Auffahren des Transportfahrzeugs (3) auf das Transportelement (7) oder zum Abfahren des Transportfahrzeugs (3) von dem Transportelement (7) versetzt wird.

2. Vorrichtung nach Anspruch 1, **dadurch gekennzeichnet, dass** das Transportelement (7) mindestens eine Führungseinrichtung zur Führung der Bewegung des Transportfahrzeugs (3) entlang einer von der Vertikalrichtung (z) verschiedenen Richtung umfasst.

3. Vorrichtung nach einem der vorangegangenen Ansprüche, **dadurch gekennzeichnet, dass** die Vorrichtung (5) eine Einrichtung zur Erfassung einer Seilspannung umfasst.

4. Vorrichtung Anspruch 3, **dadurch gekennzeichnet, dass** die Einrichtung zur Erfassung der Seilspannung als Schalter (28) ausgebildet ist, wobei der Schalter (28) mittels einer Schaltfahne (29) mechanisch mit einem Seilende gekoppelt ist.

5. Vorrichtung nach einem der vorangegangenen Ansprüche, **dadurch gekennzeichnet, dass** das Anschlagelement (11) des Transportelements (7) als Bolzen (16) ausgebildet ist.

6. Vorrichtung nach Anspruch 5, **dadurch gekennzeichnet, dass** der Bolzen (16) ein-und ausfahrbar ist.

7. Vorrichtung nach einem der vorangegangenen Ansprüche, **dadurch gekennzeichnet, dass** die Vorrichtung (5) mindestens einen Positionssensor (26) für das Anschlagelement (11) des Transportelements (7) umfasst.

8. Vorrichtung nach einem der vorangegangenen Ansprüche, **dadurch gekennzeichnet, dass** das Anschlagelement (12) der Führungseinrichtung (6) eine Ausnehmung (19) zur Aufnahme des Anschlagelements (11) des Transportelements (7) aufweist.

9. Vorrichtung nach einem der vorangegangenen Ansprüche, **dadurch gekennzeichnet, dass** das Anschlagelement (12) der Führungseinrichtung (6) beabstandet von einer Führungsfläche (14) der Führungseinrichtung (6) angeordnet ist.

10. Verfahren zur Förderung eines Regallager-Transportfahrzeugs (3) in und entgegen einer Vertikalrichtung (z) mittels einer Vorrichtung (5) gemäß einer der Ansprüche 1 bis 9, **dadurch gekennzeichnet, dass** das Transportelement (7) entlang der Führungseinrichtung (6) in eine Überfahrtposition für das Transportfahrzeug (3) bewegt wird, wobei zeitlich vor oder zeitlich nach dem Erreichen der Überfahrtposition das Anschlagelement (11) des Transportelements (7) in den Anschlagzustand versetzt wird, wobei das Transportfahrzeug (3) in dem Anschlagzustand auf das Transportelement (7) auffährt oder von dem Transportelement (7) abfährt, wobei nach Erreichen der Überfahrtposition ein Förderseil (9) in einen spannungslosen Zustand versetzt wird, wobei das Transportfahrzeug (3) in dem Anschlagzustand und in dem spannungslosen Zustand des Förderseils (9) auf das Transportelement (7) auffährt oder von dem Transportelement (7) abfährt.

11. Verfahren nach Anspruch 10, **dadurch gekennzeichnet, dass** das Transportelement (7) entgegen der Vertikalrichtung (z) auf die Überfahrtposition zu bewegt wird, wobei eine Geschwindigkeit des Transportelements (7) vor Erreichen der Überfahrtposition reduziert wird, wobei das Anschlagelement (11) des Transportelements (7) in den Anschlagzustand versetzt wird, wenn die Geschwindigkeitsreduktion erfolgt.

12. Verfahren nach einem der Ansprüche 10 bis 11, **dadurch gekennzeichnet, dass** das Transportelement (7) nach der Auf- oder Abfahrt des Transportfahrzeugs (3) in Vertikalrichtung (z) bewegt wird, wobei das Anschlagelement (11) des Transportelements (7) erst dann in den Freigabezustand versetzt wird, wenn sich das Transportelement (7) über der Überfahrtposition befindet.

13. Verfahren nach Anspruch 12, **dadurch gekennzeichnet, dass** das Anschlagelement (11) des Transportelements (7) in den Freigabezustand versetzt wird, während das Transportelement (7) in Vertikalrichtung (z) bewegt wird.

## Claims

1. A device for conveyance of a shelf storage transport vehicle (3) in and counter to a vertical direction (z), wherein the device (5) comprises at least one guide device (6) and at least one transport element (7) for the transport vehicle (3), wherein a movement of the transport element (7) in and counter to the vertical direction (z) can be guided by means of the guide device (6), wherein the device comprises at least one drive device for driving the transport element (7) with at least one conveyer rope (9), wherein the transport element (7) has at least one stop element (11) and the guide device (6) has at least one corresponding stop element (12), wherein the stop element (11) of the transport element (7) can be placed into a stop state and into a release state, and wherein the at least one stop element (12) of the guide device (6) is arranged in such a way that a movement of the transport element (7) counter to the vertical direction (z) is blocked for the transport vehicle (3) by the stop elements (11, 12) in a transit position, **characterized in that** the device is configured such that, after the transit position is reached in the stop state, the at least one conveyer rope (9) is placed into a tension-free state for the purpose of driving the transport vehicle (3) onto the transport element (7) or driving the transport vehicle (3) off the transport element (7).

2. The device as set forth in claim 1, **characterized in that** the transport element (7) comprises at least one guide device for guiding the movement of the transport vehicle (3) along a direction different from the vertical direction (z).

3. The device as set forth in one of the preceding claims, **characterized in that** the device (5) comprises a device for detecting rope tension.

4. The device as set forth in claim 3, **characterized in that** the device for detecting the rope tension is embodied as a switch (28), the switch (28) being mechanically coupled to an end of the rope by means of a switching flag (29).

5. The device as set forth in one of the preceding claims, **characterized in that** the stop element (11) of the transport element (7) is embodied as a bolt (16).

6. The device as set forth in claim 5, **characterized in that** the bolt (16) is retractable and extendable.

7. The device as set forth in one of the preceding claims, **characterized in that** the device (5) comprises at least one position sensor (26) for the stop element (11) of the transport element (7).

8. The device as set forth in one of the preceding claims, **characterized in that** the stop element (12) of the guide device (6) has a recess (19) for receiving the stop element (11) of the transport element (7).

9. The device as set forth in one of the preceding claims, **characterized in that** the stop element (12) of the guide device (6) is spaced apart from a guide surface (14) of the guide device (6).

10. A method for conveyance of a shelf storage transport vehicle (3) in and counter to a vertical direction (z) by means of a device (5) as set forth in one of claims 1 to 9, **characterized in that** the transport element (7) is moved along the guide device (6) into a transit position for the transport vehicle (3), wherein the stop element (11) of the transport element (7) is placed into the stop state before or after the transit position is reached, wherein the transport vehicle (3) is driven onto the transport element (7) or off the transport element (7) in the stop state, with a conveyer rope (9) being placed in a tension-free state after the transit position is reached, and wherein the transport vehicle (3) is driven onto the transport element (7) or off the transport element (7) in the stop state and in the tension-free state of the conveyer rope (9).

11. The method as set forth in claim 10, **characterized in that** the transport element (7) is moved counter to the vertical direction (z) toward the transit position, wherein a speed of the transport element (7) is reduced before the transit position is reached, and wherein the stop element (11) of the transport element (7) is placed into the stop state when the speed reduction occurs.

12. The method as set forth in one of claims 10 to 11, **characterized in that** the transport element (7) is moved in the vertical direction (z) after the transport vehicle (3) has been driven on or off, the stop element (11) of the transport element (7) being placed into the release state only when the transport element (7) is located above the transit position.

13. The method as set forth in claim 12, **characterized in that** the stop element (11) of the transport element (7) is placed into the release state while the transport element (7) is being moved in the vertical direction (z).

## Revendications

1. Dispositif pour le transport d'un véhicule de transport de rayonnage (3) dans et à l'encontre d'une direction verticale (z), le dispositif (5) comprenant au moins un appareil de guidage (6) et au moins un élément de transport (7) pour le véhicule de transport (3), un déplacement de l'élément de transport (7) dans et à l'encontre de la direction verticale (z) pouvant être guidé au moyen de l'appareil de guidage (6), le dispositif comprenant au moins un appareil d'entraînement pour l'entraînement de l'élément de transport (7) avec au moins un câble de transport (9), l'élément de transport (7) comprenant au moins un élément de butée (11) et l'appareil de guidage (6) comprenant au moins un élément de butée correspondant (12), l'élément de butée (11) de l'élément de transport (7) pouvant être amené dans un état de butée et dans un état de dégagement, l'au moins un élément de butée (12) de l'appareil de guidage (6) étant agencé de telle sorte qu'un déplacement de l'élément de transport (7) à l'encontre de la direction verticale (z) dans une position de passage pour le véhicule de transport (3) est bloqué par les éléments de butée (11, 12), **caractérisé en ce que** le dispositif est configuré de telle sorte qu'après avoir atteint la position de passage dans l'état de butée, l'au moins un câble de transport (9) est amené dans un état sans tension pour la montée du véhicule de transport (3) sur l'élément de transport (7) ou pour la descente du véhicule de transport (3) de l'élément de transport (7).

2. Dispositif selon la revendication 1, **caractérisé en ce que** l'élément de transport (7) comprend au moins un appareil de guidage pour le guidage du déplacement du véhicule de transport (3) le long d'une direction différente de la direction verticale (z).

3. Dispositif selon l'une quelconque des revendications précédentes, **caractérisé en ce que** le dispositif (5) comprend un appareil pour la détection d'une tension de câble.

4. Dispositif selon la revendication 3, **caractérisé en ce que** l'appareil pour la détection de la tension de câble est configuré en tant que commutateur (28), le commutateur (28) étant couplé mécaniquement à une extrémité de câble au moyen d'un talon de commutation (29) .

5. Dispositif selon l'une quelconque des revendications précédentes, **caractérisé en ce que** l'élément de butée (11) de l'élément de transport (7) est configuré sous la forme d'un boulon (16).

6. Dispositif selon la revendication 5, **caractérisé en ce que** le boulon (16) peut être rentré et sorti.

7. Dispositif selon l'une quelconque des revendications précédentes, **caractérisé en ce que** le dispositif (5) comprend au moins un capteur de position (26) pour l'élément de butée (11) de l'élément de transport (7).

8. Dispositif selon l'une quelconque des revendications précédentes, **caractérisé en ce que** l'élément de butée (12) de l'appareil de guidage (6) comprend un évidement (19) pour la réception de l'élément de butée (11) de l'élément de transport (7).

9. Dispositif selon l'une quelconque des revendications précédentes, **caractérisé en ce que** l'élément de butée (12) de l'appareil de guidage (6) est agencé espacé d'une surface de guidage (14) de l'appareil de guidage (6).

10. Procédé pour le transport d'un véhicule de transport de rayonnage (3) dans et à l'encontre d'une direction verticale (z) au moyen d'un dispositif (5) selon l'une quelconque des revendications 1 à 9, **caractérisé en ce que** l'élément de transport (7) est déplacé le long de l'appareil de guidage (6) dans une position de passage pour le véhicule de transport (3), dans le temps avant ou dans le temps après avoir atteint la position de passage, l'élément de butée (11) de l'élément de transport (7) étant amené dans l'état de butée, le véhicule de transport (3) étant monté sur l'élément de transport (7) ou descendu de l'élément de transport (7) dans l'état de butée, après avoir atteint la position de passage, un câble de transport (9) étant amené dans un état sans tension, le véhicule de transport (3) étant monté sur l'élément de transport (7) ou descendu de l'élément de transport (7) dans l'état de butée et dans l'état sans tension du câble de transport (9).

11. Procédé selon la revendication 10, **caractérisé en ce que** l'élément de transport (7) est déplacé à l'encontre de la direction verticale (z) vers la position de passage, une vitesse de l'élément de transport (7) étant réduite avant d'atteindre la position de passage, l'élément de butée (11) de l'élément de transport (7) étant amené dans l'état de butée lorsque la réduction de vitesse a lieu.

12. Procédé selon l'une quelconque des revendications 10 à 11, **caractérisé en ce que** l'élément de transport (7) est déplacé dans la direction verticale (z) après la montée ou la descente du véhicule de transport (3), l'élément de butée (11) de l'élément de transport (7) n'étant amené dans l'état de dégagement que lorsque l'élément de transport (7) se trouve sur la position de passage.

13. Procédé selon la revendication 12, **caractérisé en ce que** l'élément de butée (11) de l'élément de transport (7) est amené dans l'état de dégagement pendant que l'élément de transport (7) est déplacé dans la direction verticale (z).
